# EUROPEAN PATENT APPLICATION

(11) **EP 4 752 708 A1**
(43) Date of publication of application: **03.06.2026**
(21) Application number: 25214607.1
(22) Date of filing: 10.11.2025
(51) Int. Cl.: G06F 8/65, G06F 21/00, G06F 8/71

(54) **UPDATING THE SOFTWARE FOR PRINTING DEVICES AFTER COMPARING VERSIONS, CHECKING FOR COUNTRY CODES AND AFTER CHECKING IF PRINTER IS SUBSCRIBED**

(30) Priority: 28.11.2024 JP 2024207235
(71) Applicant: BROTHER KOGYO KABUSHIKI KAISHA, Aichi-ken 467-8561 (JP)
(72) Inventor: NAGATA, Haruki, Nagoya, 467-8562 (JP)
(74) Representative: Kuhnen & Wacker Patent- und Rechtsanwaltsbüro PartG mbB

(57) **Abstract**

A terminal device (100) may, in a case where a computer program (142) is launched by a first launch instruction and a version of the computer program (142) satisfies a first predetermined condition, display, on a display of the terminal device (100), a first update screen (SC2). In a case where the computer program (142) is launched by the first launch instruction and the version does not satisfy the first predetermined condition, the first update screen (SC2) may not be displayed and a first predetermined screen (SC18) may be displayed on the display. The terminal device (100) may, in a case where the computer program (142) is launched by a second launch instruction, display, on the display (114), a second predetermined screen (SC38, SC42) without displaying the first update screen (SC2) regardless of whether the version of the computer program (142) satisfies the first predetermined condition.

## Description

### TECHNICAL FIELD

The present teachings relate to a terminal device displaying a first update screen.

### BACKGROUND ART

US Patent Application Publication No. 2011-239205 discloses an information processing system including a client PC and a server. The client PC reads out application information from a section which stores the application information and determines whether to display update information. When the client PC determines to display the update information, the client PC reads out the update information from a section which stores the update information and displays the update information.

### DESCRIPTION

In US Patent Application Publication No. 2011-239205, no consideration is given on switching whether to display the update information according to a type of an instruction for launching an application.

The present teachings provide an art configured to allow to suitably switch whether to display a first update screen on a display.

The present teachings disclose a computer program (142) for a terminal device (100). The computer program (142) may cause a computer (130) of the terminal device to function as a first display control unit configured to, in a case where the computer program (142) is launched by a first launch instruction and a version of the computer program (142) satisfies a first predetermined condition, display, on a display (114) of the terminal device (100), a first update screen (SC2) for prompting a user to upgrade the version of the computer program (142). In a case where the computer program (142) is launched by the first launch instruction and the version of the computer program (142) does not satisfy the first predetermined condition, the first update screen (SC2) may not be displayed but a first predetermined screen (SC18) may be displayed on the display (114). The computer program (142) may cause the computer (130) to function as a second display control unit configured to, in a case where the computer program (142) is launched by a second launch instruction different from the first launch instruction, display on the display (114), a second predetermined screen (SC38, SC42) without displaying the first update screen (SC2) regardless of whether the version of the computer program (142) satisfies the first predetermined condition.

According to the above configuration, the terminal device displays the first update screen on the display in the case where the computer program is launched by the first launch instruction and also the version of the computer program satisfies the first predetermined condition. On the other hand, the terminal device displays the first predetermined screen on the display without displaying the first update screen in the case where the computer program is launched by the first launch instruction and the version of the computer program does not satisfy the first predetermined condition. Further, in the case where the computer program is launched by the second launch instruction, the terminal device displays the second predetermined screen on the display without displaying the first update screen, regardless of whether the version of the computer program satisfies the first predetermined condition. Accordingly, the terminal device can suitably switch whether to display the first update screen on the display.

In a case where an operation for upgrading the version of the computer program (142) is not received under a state where the first update screen (SC2) is displayed, displaying of a screen different from the first update screen (SC2) on the display (114) may be limited.

The first update screen (SC2) may include an update object (602) for receiving the operation for upgrading the version of the computer program (142) but may not include an object for receiving an operation for not upgrading the version of the computer program (142).

The computer program (142) may further cause the computer (130) to function as: a supply unit configured to, in a case where an operation on the update object (602) is received, supply, to an Operating System (OS) program (140) of the terminal device, a display instruction of a web page for upgrading the version of the computer program (142).

The computer program (142) may be configured to, in a case where the display instruction is supplied to the OS program (140), shift from a foreground state in which the computer program (142) is running in a foreground to a background state in which the computer program (142) is running in a background. The first display control unit may be configured to: in a case where the computer program (142) shifts from the background state to the foreground state and the version of the computer program (142) satisfies the first predetermined condition after the display instruction has been supplied to the OS program (140), display the first update screen (SC2) on the display (114), and in a case where the computer program (142) shifts from the background state to the foreground state and the version of the computer program (142) does not satisfy the first predetermined condition after the display instruction has been supplied to the OS program (140), display the first predetermined screen (SC18) on the display (114) without displaying the first update screen (SC2).

The computer program (142) may further cause the computer (130) to function as a third display control unit configured to, in a case where an operation on a specific function object

(644) included in a plurality of function objects (640, 642, 644) displayed on a function selection screen (SC50) is received and the version of the computer program (142) satisfies a second predetermined condition, display, on the display (114), a second update screen (SC54) different from the first update screen (SC2). The second update screen (SC54) may include a second update object (762) for receiving the operation for upgrading the version of the computer program (142) and a non-update object (764) for receiving the operation for not upgrading the version of the computer program (142). In a case where an operation on the specific function object (644) is received and the version of the computer program (142) does not satisfy the second predetermined condition, the second update screen (SC54) may not be displayed but a third predetermined screen (SC60) corresponding to the specific function object (644) may be displayed on the display (114).

In a case where an operation on the non-update object (764) is received on the second update screen (SC54), use of a specific function corresponding to the specific function object may be limited.

The second predetermined condition may be different from the first predetermined condition.

The computer program (142) may further cause the computer (130) to function as a condition information request sending unit configured to, in a case where the computer program (142) is launched by the first launch instruction, send a condition information request to a management server (400), wherein the management server (400) being configured to store condition information indicating the first predetermined condition. The computer program (142) may further cause the computer (130) to function as a condition information reception unit configured to, in response to the condition information request being sent to the management server (400), receive the condition information from the management server (400). The first display control unit may be configured to, in a case where the computer program (142) is launched by the first launch instruction and the condition information is not received from the management server (400) even though the condition information request has been sent to the management server (400), display, on the display (114), the first predetermined screen (SC18) without displaying the first update screen (SC2) regardless of whether the version of the computer program (142) satisfies the first predetermined condition.

The computer program (142) may further cause the computer (130) to function as a regional information acquisition unit configured to acquire regional information indicating a region in which the terminal device (100) is used. The first display control unit may be configured to: in a case where the computer program (142) is launched by the first launch instruction, and the regional information indicates a first region, and the version of the computer program (142) satisfies the first predetermined condition, display the first update screen (SC2) on the display, in a case where the computer program (142) is launched by the first launch instruction, and the regional information indicates the first region, and the version of the computer program (142) does not satisfy the first predetermined condition, display the first predetermined screen (SC18) on the display (114) without displaying the first update screen (SC2), and in a case where the computer program (142) is launched by the first launch instruction, and the regional information indicates a second region different from the first region, display the first predetermined screen (SC18) without displaying the first update screen (SC2) regardless of whether the version of the computer program (142) satisfies the first predetermined condition.

The first predetermined screen (SC18) may be a home screen. The second predetermined screen (SC38, SC42) may be a screen different from the home screen and corresponds to the second launch instruction.

The second launch instruction may include image data representing a specific image. The second predetermined screen (SC42) may be a preview screen including a print preview image corresponding to the specific image represented by the image data.

The second predetermined screen (SC38) may be a screen related to a service related to a target device (10B) different from the terminal device (100). The service may be configured to be realized by the target device (10B) and a service providing server (300) configured to supply the service, cooperating with each other.

The computer program (142) may further cause the computer (130) to function as a first launch instruction acquisition unit configured to, in response to an icon (610) corresponding to the computer program (142) being displayed on the display (114) and an operation on the icon (610) being received, acquire the first launch instruction from an Operating System (OS) program (140) of the terminal device (100).

The computer program (142) may further cause the computer (130) to function as a first launch instruction acquisition unit configured to, in response to a notification object corresponding to the computer program (142) being displayed on the display (114) and an operation on the notification object being received, acquire the first launch instruction from an Operating System (OS) program (140) of the terminal device (100).

The computer program (142) may further cause the computer (130) to function as a second launch instruction acquisition unit configured to acquire the second launch instruction from a specific computer program (144) different from the computer program (142) and an Operating System (OS) program (140) of the terminal device (100).

A non-transitory computer-readable recording medium storing the above-described computer program for a terminal device, a terminal device realized by the above-described recording medium, and a method for controlling a terminal device are also novel and useful. The above-mentioned recording medium may be a single medium, or plural media.
FIG. 1 illustrates a configuration of a communication system.
FIG. 2 illustrates an example of a management table.
FIG. 3 illustrates a flowchart of a first check process.
FIG. 4 illustrates screens displayed on a terminal device in Case A.
FIG. 5 illustrates screens displayed on a terminal device in Case B.
FIG. 6 illustrates screens displayed on a terminal device in Case C.
FIG. 7 illustrates screens displayed on a terminal device in Case D.
FIG. 8 illustrates a flowchart of a second check process.
FIG. 9 illustrates an example of screens displayed on a terminal device in the second check process.

### (EMBODIMENT)

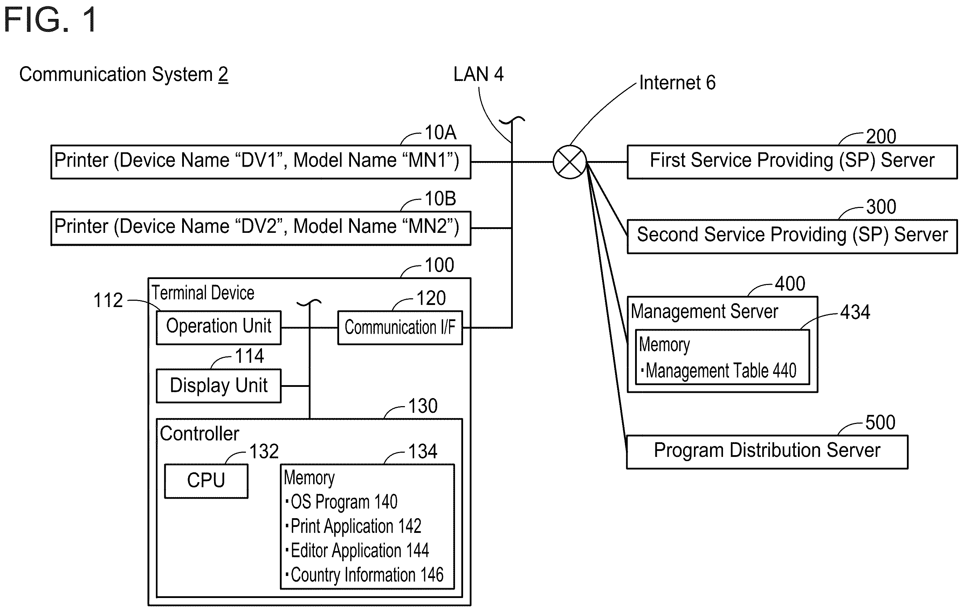

### (Configuration of Communication System 2; FIG. 1)

As illustrated in FIG. 1, a communication system 2 comprises a plurality of printers 10A, 10B, a terminal device 100, a first service providing server 200, a second service providing server 300, a management server 400, and a program distribution server 500. Hereafter, the service providing server will be referred to as "SP server". The printers 10A, 10B and the terminal device 100 are connected to a Local Area Network (LAN) 4. The printers 10A, 10B and the terminal device 100 are configured to communicate with each other via the LAN 4. The printers 10A, 10B, the terminal device 100, the first SP server 200, the second SP server 300, the management server 400, and the program distribution server 500 are connected to the Internet 6. The printers 10A, 10B, the terminal device 100, the first SP server 200, the second SP server 300, the management server 400, and the program distribution server 500 are configured to communicate with each other via the Internet 6.

### (Configurations of Printers 10A, 10B)

Each of the printers 10A, 10B is a peripheral device configured to execute a print function. Each of the printers 10A, 10B is a peripheral device for a personal computer (PC), for example. Each of the printers 10A, 10B comprises a print mechanism configured to execute the print function. The print mechanism includes an inkjet print engine, an electronic photo print engine, or a thermal print engine. The inkjet print engine comprises a print head which ejects ink droplets. The electronic photo print engine comprises a photoreceptor and an exposure device which emits light to expose the photoreceptor. The thermal print engine comprises a print head which ejects heat with a heater.

The printer 10A has a device name "DV1" and a model name "MN1". The device name is a name given to a printer by an administrator of the printer. The model name is a name indicating a model of the printer. The printer 10A supports a subscription service related to a printer.

The subscription service is a service provided by the first SP server 200. In the subscription service, a fixed fee is charged if the number of printed sheets within a predetermined period is equal to or less than a contract number of printed sheets. Although this is an example, the predetermined period is "one month", and the contract number of printed sheets is "1000 sheets". Also, in the subscription service, if the number of printed sheets within the predetermined period exceeds the contract number of printed sheets, a fee obtained by summing up the fixed fee and a fee according to an excess number exceeding the contract number of printed sheets will be charged. The subscription service is a so-called flat rate service. The subscription service may include an automatic ordering service of automatically ordering a new cartridge when the remaining level of ink in a cartridge mounted in the printer becomes a predetermined level or less. The cartridge may be regarded as a consumable item of the printer. The ink may also be termed a color material. If the print engine of the printer is the electronic photo one, a toner is housed in the cartridge.

The printer 10B has a device name "DV2" and a model name "MN2". The printer 10B supports a charge service related to a printer.

The charge service is a service provided by the second SP server 300. The charge service is a service for which a fee is charged. The charge service is a service where a user pays a fee in advance such that the user can print the number of sheets according to how much the paid fee is. The charge service may include the automatic ordering service of automatically ordering a new cartridge when the remaining level of ink in a cartridge mounted in the printer becomes a predetermined level or less.

### (Configuration of Terminal Device 100)

The terminal device 100 is a terminal device such as a mobile phone, a PDA, a desktop PC, a laptop PC, a tablet PC, for example. Although this is an example, the mobile phone is a smartphone. The terminal device 100 comprises an operation unit 112, a display unit 114, a communication interface 120, and a controller 130. Hereafter, the interface will be referred to as "I/F".

The operation unit 112 is a user interface which allows a user to input various information to the terminal device 100. The operation unit 112 comprises a touch panel configured to display software key(s), hardware key(s), or a both of them. The software key(s) are operational object(s). The hardware key(s) include, for example, button(s) and/or switch(es). The display unit 114 is a display or a panel configured to display various information. The panel may be a touch panel or may not be a touch panel. The panel is for example a liquid crystal panel or an organic EL panel. The communication I/F 120 is connected to the LAN 4.

The controller 130 comprises a CPU 132 and a memory 134. The memory 134 comprises a primary storage and an auxiliary storage. Although this is an example, the primary storage includes a RAM and cache memory. Although this is an example, the auxiliary storage may be a ROM, a flash memory, a Solid-State Drive (SSD), a Hard Disk Drive (HDD), or a combination thereof. The auxiliary storage of the memory 134 has an OS program 140, a print application 142, an editor application 144, and country information 146 stored therein. "Application" is an abbreviation of an application program. Hereafter, the OS program 140 will be referred to as "OS 140". The OS 140 controls basic operations of the terminal device 100. The print application 142 is a program for causing a printer to execute a print function. The editor application 144 is a program for creating new year greeting cards. In a modification, the editor application 144 may be a program for editing and/or creating a document. The country information 146 is information indicative of a country in which the terminal device 100 is used. The CPU 132 realizes various processes in accordance with a program loaded from the auxiliary storage to the primary storage. Hereafter, various processes realized by the CPU 132 following a program may be described as if the OS 140, the print application 142, or the editor application 144 executes these processes as a subject of action.

### (Configuration of First SP Server 200)

The first SP server 200 is a server disposed on the Internet 6 by a vendor of the printers 10A, 10B. Hereafter, such vendor may be referred to as "vendor" simply. The first SP server 200 may be a single server or a collection of plural servers. The first SP server 200 provides the subscription service. The user can use a subscription service function corresponding to the subscription service through the terminal device 100. The subscription service function is realized by the printer and the first SP server 200 cooperating with each other. The subscription service function includes a function of having the user subscribe to the subscription service and a function of changing settings related to the subscription service, for example.

### (Configuration of Second SP Server 300)

The second SP server 300 is a server disposed on the Internet 6 by the vendor. The second SP server 300 may be a single server and a collection of plural servers. The second SP server 300 provides the charge service. The user can use a charge service function corresponding to the charge service through the terminal device 100. The charge service function is realized by the printer and the second SP server 300 cooperating with each other. The charge service function includes a function of having the user subscribe to the charge service and a function of changing settings related to the charge service, for example.

### (Configuration of Management Server 400)

The management server 400 is a server disposed on the Internet 6 by the vendor. The management server 400 may be a single server, or a collection of plural servers. The management server 400 manages the version of the print application 142. A memory 434 of the management server 400 has a management table 440 stored therein.

### (Configuration of Program Distribution Server 500)

The program distribution server 500 is a server disposed on the Internet 6 by the vendor. The program distribution server 500 may be a single server or a collection of plural servers. The program distribution server 500 manages application(s) for terminal device(s) and firmware(s) for printer(s).

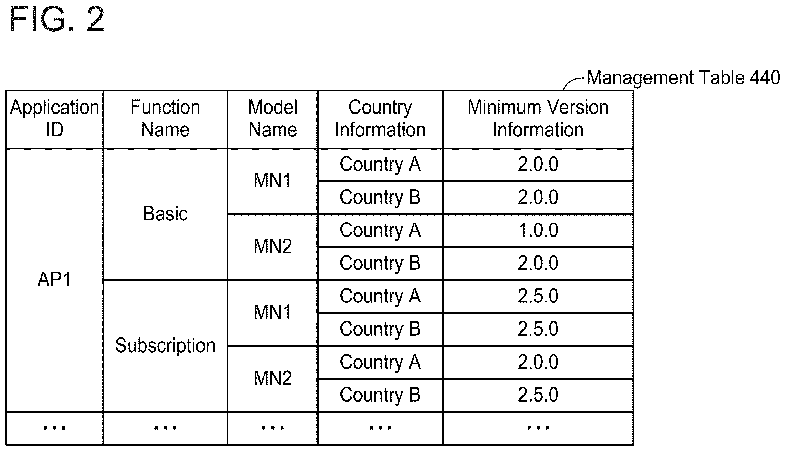

### (Content of Management Table 440; FIG. 2)

With reference to FIG. 2, the content of the management table 440 of the management server 400 will be described. The management table 440 of the management server 400 is a table for managing minimum version information of an application. The management table 440 stores an application ID, a function name, a model name, country information, and minimum version information in association with each other. The application ID is information for identifying an application for a mobile device and/or an application for a PC. The function name includes "Basic", "Subscription", and "Charge", for example. The function name "Basic" is information corresponding to basic function(s) and function(s) related to security of an application. The minimum version information corresponding to the function name "Basic" is information indicating the minimum version for using the basic function(s) of the application. The function name "Subscription" is information corresponding to the subscription service function. The minimum version information corresponding to the function name "Subscription" is information indicating the minimum version for using the subscription service function. The function name "Charge" is information corresponding to the charge service function. The minimum version information corresponding to the function name "Charge" is information indicating the minimum version for using the charge service function. The respective information in the management table 440 is set by an administrator of the management server 400.

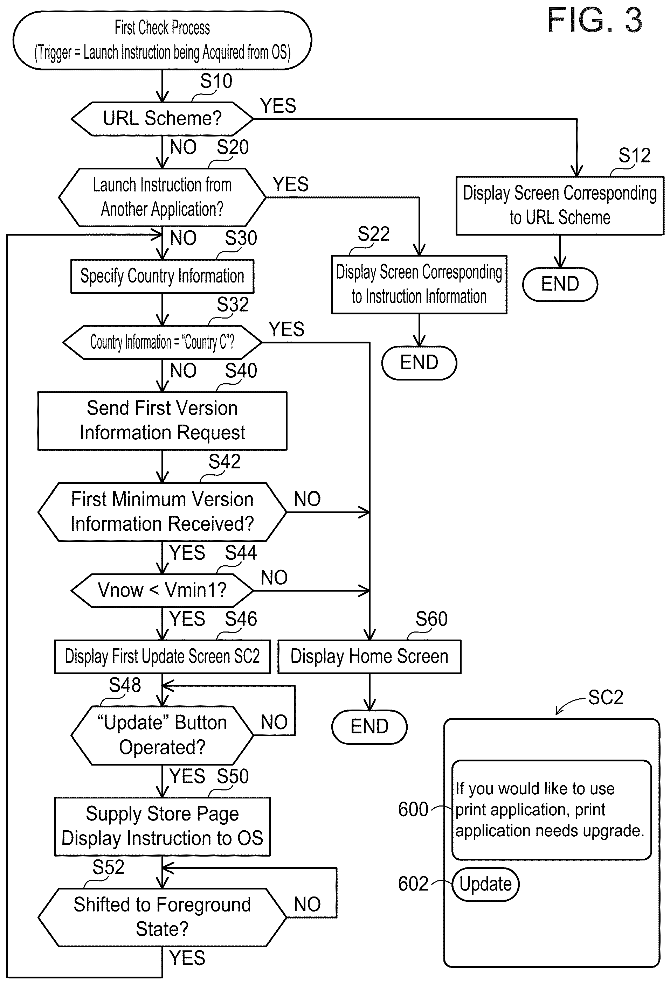

### (First Check Process; FIG. 3)

With reference to FIG. 3, a first check process executed by the print application 142 of the terminal device 100 will be described. When an launch instruction is acquired from the OS 140, the print application 142 executes processes of FIG. 3. That is, when the print application 142 is launched by the launch instruction, the processes of FIG. 3 are started. In response of the launch of the print application 142, the print application 142 shifts to a foreground state where the print application 142 is running in the foreground. Although this is an example, the foreground state is a state where a screen corresponding to the print application 142 is displayed on the display unit 114. Hereafter, all communication executed between the terminal device 100 and another device is executed via the communication I/F 120 of the terminal device 100. Accordingly, hereafter, the recitation "via the communication I/F 120" will be omitted. Further, the print application 142 accesses each hardware such as the display unit 114, the memory 134, the communication I/F 120 via the OS 140. Hereafter, description may be made without mentioning that the print application 142 executes a process via the OS 140.

In S 10, the print application 142 determines whether the launch instruction acquired from the OS 140 is an launch instruction corresponding to a URL scheme. Hereafter, the launch instruction acquired from the OS 140 will be referred to as "target launch instruction". When the target launch instruction is an launch instruction corresponding to the URL scheme (YES to S10), the print application 142 proceeds to S12. Contrary to this, when the target launch instruction is not an launch instruction corresponding to the URL scheme (NO to S10), the print application 142 proceeds to S20.

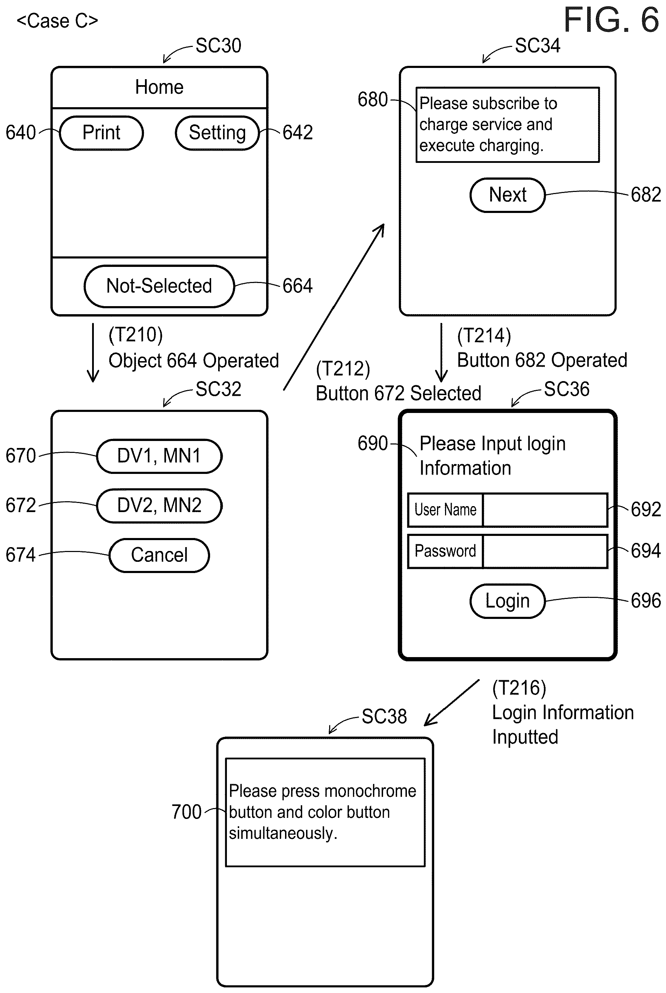

In S12, the print application 142 causes the display unit 114 to display a screen corresponding to the URL scheme. Although this is an example, the screen corresponding to the URL scheme is an instruction screen SC38 (see FIG. 6) for instructing a user to execute physical authentication. When S12 ends, the print application 142 ends the processes of FIG. 3.

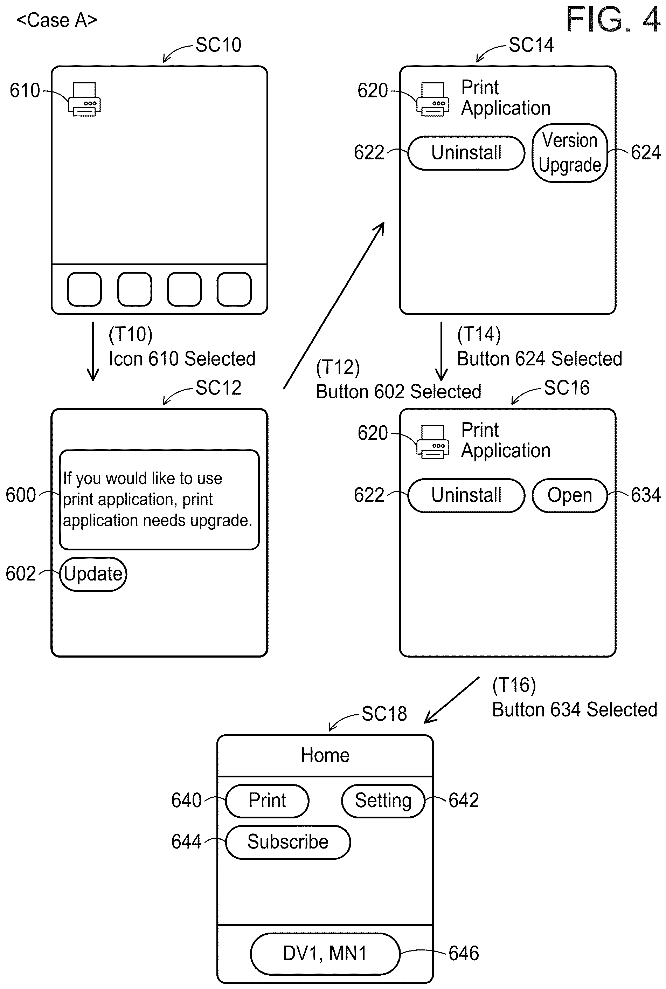

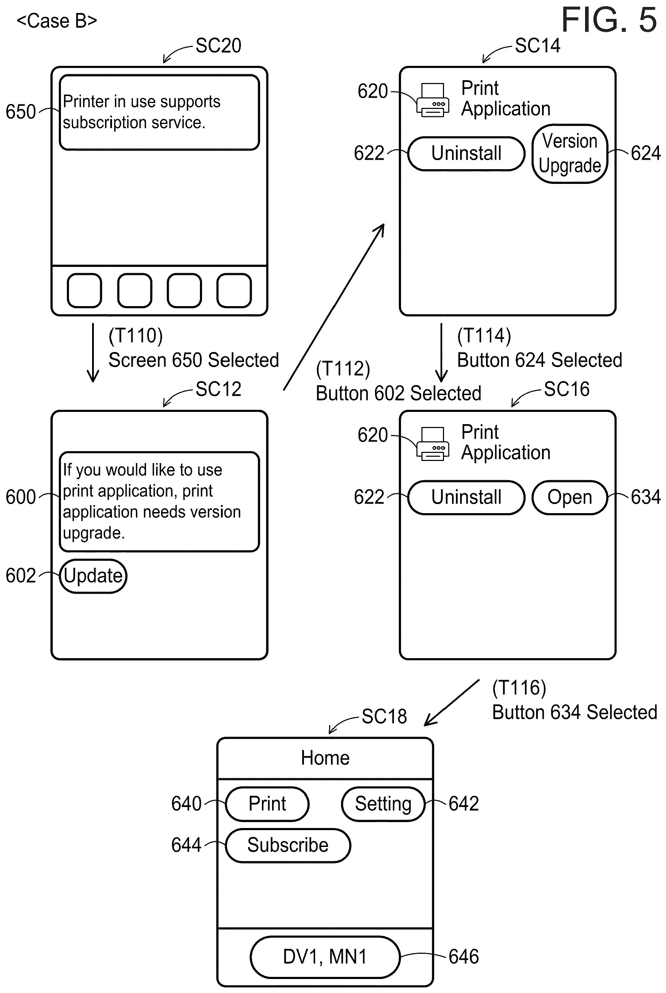

Further, in S20, the print application 142 determines whether the target launch instruction is an launch instruction corresponding to another application different from the print application 142. When the target launch instruction is an launch instruction corresponding to another application (YES to S20), the print application 142 proceeds to S22. Contrary to this, when the target launch instruction is not an launch instruction corresponding to another application (NO to S20), the print application 142 proceeds to S30. Here, the target launch instruction in the case of NO to S10 and NO to S20 corresponds to an operation on an icon 610 (see FIG. 4) or an operation on a notification screen 650 (see FIG. 5) itself. Hereafter, the launch instruction corresponding to the operation on the icon 610 (see FIG. 4) or the notification screen 650 (see FIG. 5) itself may be referred to as "first launch instruction". Likewise, the launch instruction corresponding to the URL scheme and the launch instruction corresponding to another application may be referred to as "second launch instruction".

The print application 142 is configured to distinguish between the launch instruction corresponding to the URL scheme, the launch instruction corresponding to another application, and the first launch instruction. Although this is an example, the launch instruction is added with identification information for distinguishing a type of launch instruction. The print application 142 performs determinations of S10, S20 based on the above-mentioned identification information. In a modification, the launch instruction may have a different method and/or different function. In this case, the print application 142 performs determination of S10, S20 based on the type of method and/or function.

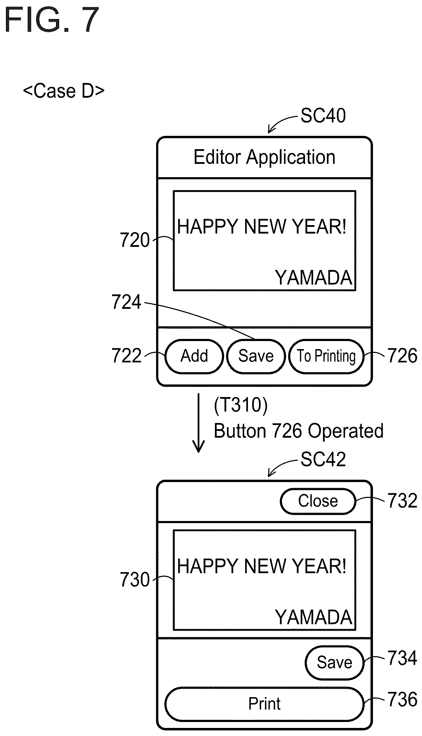

In S22, the print application 142 causes the display unit 114 to display a screen corresponding to instruction information included in the target launch instruction. Although this is an example, the screen corresponding to the instruction information is a preview screen SC42 (see FIG. 7). When S22 ends, the print application 142 ends the processes of FIG. 3.

In S30, the print application 142 specifies the country information 146 in the memory 134.

In S32, the print application 142 determines whether the specified country information 146 indicates "Country C". When the country information 146 indicates "Country C" (YES to S32), the print application 142 proceeds to S60. Contrary to this, when the country information 146 does not indicate "Country C" (NO to S32), the print application 142 proceeds to S40.

In S40, the print application 142 sends a first version information request to the management server 400. The first version information request is a signal for requesting the management server 400 to send the minimum version information corresponding to the function name "Basic". The first version information request includes an application ID "AP1" of the print application 142, the function name "Basic", a model name, and the country information 146. The model name is a model name of the printer registered in the print application 142. When the management server 400 receives the first version information request from the terminal device 100, the management server 400 specifies first minimum version information. The first minimum version information is minimum version information stored in association with the respective information in the first version information request in the management table 440. Then, the management server 400 sends the first minimum version information to the terminal device 100.

In S42, the print application 142 determines whether the print application 142 has received the first version information from the management server 400. When the print application 142 receives the first minimum version information from the management server 400 (YES to S42), the print application 142 proceeds to S44. Contrary to this, when the print application 142 does not receive the first minimum version information from the management server 400 (NO to S42), the print application 142 proceeds to S60. Although this is an example, a case where the print application 142 does not receive the first minimum version information from the management server 400 is either a case in which communication failure is occurring on the Internet 6, the management server 400 is down, or the management server 400 is undergoing maintenance.

In S44, the print application 142 determines whether a current version Vnow of the print application 142 is older than a first minimum version Vmin1 indicated by the first minimum version information. When the current version Vnow is older than the first minimum version Vmin1 (YES to S44), the print application 142 proceeds to S46. Contrary to this, when the current version Vnow is not older than the first minimum version Vmin1 (NO to S44), the print application 142 proceeds to S60.

In S46, the print application 142 causes the display unit 114 to display a first update screen SC2. The first update screen SC2 includes a first message 600, an "Update" button 602. The first message 600 indicates that upgrade of the version of the print application 142 is necessary in order to use the print application 142. The "Update" button 602 is a button for transitioning to a page for upgrading the version of the print application 142. The first update screen SC2 does not include a button for closing the first update screen SC2 or a button for cancelling to upgrade the version of the print application 142, for example. That is, the first update screen SC2 is configured to inevitably make the user of the terminal device 100 operate on the "Update" button 602. According to the above configuration, the chance of the version of the print application 142 being upgraded can be increased.

In S48, the print application 142 monitors receiving an operation on the "Update" button 602. When the print application 142 receives the operation on the "Update" button 602, the print application 142 determines YES to S48, and proceeds to S50.

In S50, the print application 142 supplies a store page display instruction to the OS 140. The store page display instruction is a signal for instructing the OS 140 to display a store page corresponding to the print application 142. When the print application 142 supplies the store page display instruction to the OS 140, the print application 142 shifts from the foreground state to a background state. The background state is a state where the print application 142 is running in the background. Although this is an example, the background state is a state where, with the print application 142 running, a screen corresponding to the print application 142 is not displayed on the display unit 114. When the OS 140 acquires the store page display instruction from the print application 142, the OS 140 accesses the program distribution server 500 and causes the display unit 114 to display a store page. The store page is a webpage. According to the above configuration, by performing the operation on the "Update" button 602, the user can cause the display unit 114 to display the store page. Accordingly, user convenience can be improved.

In S52, the print application 142 monitors shifting from the background state to the foreground state. Specifically, the print application 142 determines whether the print application 142 acquires a shifting instruction to the foreground state from the OS 140. When the print application 142 acquires the shifting instruction from the OS 140, the print application 142 determines YES to S52, and returns to S30.

Further, when YES is determined to S32, NO is determined to S42, or NO is determined to S44, the print application 142 causes the display unit 114 to display a home screen in S60. When S60 ends, the print application 142 ends the processes of FIG. 3.

As illustrated in FIG. 3, when the first launch instruction is acquired from the OS 140 (NO to S10 and S20), the print application 142 may cause the display unit 114 to display the first update screen SC2. On the other hand, when the second launch instruction is acquired from the OS 140 (YES to S10 or S20), the print application 142 does not cause the display unit 114 to display the first update screen SC2.

As mentioned above, when the print application 142 does not receive the first minimum version information from the management server 400 (NO to S42), the print application 142 causes the display unit 114 to display the home screen without displaying the first update screen regardless of whether the current version Vnow is older than the first minimum version Vmin1. When the print application 142 does not receive the first minimum version information from the management server 400, communication failure may be occurring on the Internet 6. When communication failure is occurring on the Internet 6, the terminal device 100 cannot access the program distribution server 500. That is, the upgrade of the version of the print application 142 will fail. According to the above configuration, failure in the upgrade of the version of the print application 142 can be suppressed. Accordingly, user convenience can be improved.

As mentioned above, when the country information 146 indicates "Country C" (YES to S32), the print application 142 causes the display unit 114 to display the home screen without displaying the first update screen regardless of whether the current version Vnow is older than the first minimum version Vmin1. A country where upgrade of the version of the print application 142 by using the first update screen SC2 is limited may be assumed. According to the above configuration, the print application 142 can suitably switch whether to display the first update screen SC2.

### (Cases A to D; FIGS. 4 to 7)

With reference to FIGS. 4 to 7, Cases A to D realized by the first check process of FIG. 3 will be described.

### (Case A; FIG. 4)

With reference to FIG. 4, Case A will be described. In Case A, in response to the icon 610 corresponding to the print application 142 being operated by the user, the print application 142 is launched. At an initial state of Case A, a screen including the icon 610 is displayed on the display unit 114 of the terminal device 100. At the initial state of Case A, the print application 142 is not launched (i.e., not running). In the management table 440 of the management server 400, minimum version information "2.0.0" is stored in association with an application ID "AP1", the function name "Basic", the model name "MN1", and country information "Country A". The current version Vnow of the print application 142 is "1.5.0". In the print application 142, the printer 10A is registered. The country information 146 in the memory 134 of the terminal device 100 is "Country A". In the program distribution server 500, an update program for upgrading the version of the print application 142 to version "2.5.0" is stored.

In T10, the user performs an operation on the icon 610. Due to this, the OS 140 supplies an launch instruction including first operation information indicating that the operation on the icon 610 has been received to the print application 142. Although this is an example, the first operation information is identification information indicating that the launch instruction is the first launch instruction. The print application 142 is launched in response to the launch instruction being acquired from the OS 140. Due to this, the print application 142 shifts to the foreground state. The print application 142 determines that the target launch instruction is not the launch instruction corresponding to the URL scheme (NO to S10 of FIG. 3). Also, the print application 142 determines that the target launch instruction is not the launch instruction corresponding to another application different from the print application 142 (NO to S20). In this case, the print application 142 specifies the country information 146 in the memory 134 (S30), and determines that the country information 146 does not indicate "Country C" (NO to S32). The print application 142 sends the first version information request including the application ID "AP1", the function name "Basic", the model name "MN1", and the country information 146 to the management server 400 (S40). In the present case, the print application 142 receives the first minimum version information indicating the first minimum version Vmin1 "2.0.0" from the management server 400 (YES to S42). The print application 142 determines that the current version Vnow "1.5.0" is older than the first minimum version Vmin1 "2.0.0" (YES to S44). In this case, the print application 142 causes the display unit 114 to display the first update screen SC12 (S46). The first update screen SC12 is the same screen as the first update screen SC2 of FIG. 3.

In T12, the user performs an operation on the "Update" button 602. Due to this, the print application 142 determines that the print application 142 has received the operation on the "Update" button 602 (YES to S48), the print application 142 supplies the store page display instruction to the OS 140 (S50). Also, the print application 142 shifts from the foreground state to the background state. When the OS 140 acquires the store page display instruction from the print application 142, the OS 140 accesses the program distribution server 500, and causes the display unit 114 to display a first store page SC14. The first store page SC14 includes application information 620, an "Uninstall" button 622, and a "Version Upgrade" button 624. The application information 620 indicates information of an application corresponding to the first store page SC14.

In T14, the user performs an operation on the "Version Upgrade" button 624. Due to this, the OS 140 sends a program request including the application ID "AP1" and the model name "MN1" to the program distribution server 500. The OS 140 receives an update program from the program distribution server 500. The OS 140 upgrades the version of the print application 142 in the memory 134 by using the received update program. Due to this, the version of the print application 142 is upgraded to the version "2.5.0".

When the upgrade of the version of the print application 142 is completed, the OS 140 causes the display unit 114 to display a second store page SC16. The second store page SC16 includes the application information 620, the "Uninstall" button 622, and an "Open" button 634. The "Open" button 634 is a button for shifting the print application 142 from the background state to the foreground state.

In T16, the user performs an operation on the "Open" button 634. Due to this, the OS 140 supplies the shifting instruction to the print application 142. The shifting instruction is an instruction for shifting the print application 142 from the background state to the foreground state. When the print application 142 acquires the shifting instruction from the OS 140, the print application 142 shifts from the background state to the foreground state (YES to S52). The print application 142 specifies the country information 146 in the memory 134 (S30), and determines that the country information 146 does not indicate "Country C" (NO to S32). In response to sending the first version information request to the management server 400 (S40), the print application 142 receives the first minimum version information from the management server 400 (YES to S42). The print application 142 determines that the current version Vnow "2.5.0" is not older than the first minimum version Vmin1 "2.0.0" (NO to S44). In this case, the print application 142 causes the display unit 114 to display a home screen SC18. The home screen SC18 includes a "Print" button 640, a "Setting" button 642, a "Subscribe" button 644, and a device object 646. The "Subscribe" button 644 is a button for using the subscription service function. The device object 646 has a device name and a model name of a device registered in the print application 142 displayed thereon. The device object 646 indicates information related to a device which is a target to which the instruction information such as a print instruction is to be sent. Here, when the device is not registered in the print application 142, a character string "Not-Selected" is displayed on the device object 646.

The user may perform an operation for shifting the print application 142 to the foreground state on the terminal device 100 without selecting the "Version Upgrade" button 624 in the first store page SC14. In this case, the version of the print application 142 is not upgraded. As mentioned above, when the print application 142 shifts from the background state to the foreground state, the print application 142 again determines whether the current version Vnow is older than the first minimum version Vmin1. When the print application 142 determines that the current version Vnow is older than the first minimum version Vmin1, the print application 142 again causes the display unit 114 to display the first update screen SC12. Accordingly, the chance of the version of the print application 142 being upgraded can be increased.

### (Case B; FIG. 5)

With reference to FIG. 5, Case B will be described. In Case B, in response to an operation on the notification screen 650 itself being performed by the user, the print application 142 is launched. An initial state of Case B is the same as the initial state of Case A except that in Case B a screen including the notification screen 650 is displayed on the display unit 114 of the terminal device 100. The notification screen 650 includes a message indicating that the printer 10A registered in the print application 142 supports the subscription service. When the OS 140 receives notification screen data from a notification server, the OS 140 causes the display unit 114 to display the notification screen 650.

In T110, the user performs an operation on the notification screen 650 itself. Due to this, the OS 140 supplies an launch instruction including second operation information indicating that the OS 140 has received the operation on the notification screen 650 itself to the print application 142. Although this is an example, the second operation information is identification information indicating that the launch instruction is the first launch instruction. In response to the launch instruction being acquired from the OS 140, the print application 142 is launched. Due to this, the print application 142 shifts to the foreground state. Subsequently, in response to the same processes as those in Case A being executed, the first update screen SC12 is displayed on the display unit 114. T112 to T116 are the same as T12 to T16 of FIG. 4. As such, when the operation on the notification screen 650 itself is performed by the user also, the first update screen SC12 is displayed on the display unit 114.

### (Case C; FIG. 6)

With reference to FIG. 6, Case C will be described. In Case C, the launch instruction corresponding to the URL scheme is supplied to the print application 142. An initial state of Case C is the same as the initial state of Case A except that in Case C a printer is not registered in the print application 142 and the home screen SC30 is displayed on the display unit 114 of the terminal device 100. The home screen SC30 includes a "Print" button 640, a "Setting" button 642, and a device object 664 including a character string "Not-Selected".

In T210, the user performs an operation on the device object 664. Due to this, the print application 142 executes a search process for searching for a device belonging to the LAN 4, and causes the display unit 114 to display a device selection screen SC32. In the search process, the print application 142 sends a search signal for searching for a device belonging to the LAN 4. Then, the print application 142 receives response signals including a device name and a model name from the printers 10A, 10B belonging to the LAN 4. The print application 142 causes the display unit 114 to display the device selection screen SC32 by using the received response signals. The device selection screen SC32 includes device buttons 670, 672 and a "Cancel" button 674. The device buttons 670, 672 are buttons for selecting a device to be registered in the print application 142. The device buttons 670, 672 are respectively buttons corresponding to the printers 10A, 10B.

In T212, the user performs an operation on the device button 672. Due to this, the print application 142 determines that the printer 10B corresponding to the device button 672 supports the charge service, and causes the display unit 114 to display a charge service screen SC34. The charge service screen SC34 includes a second message 680 and a "Next" button 682. The second message 680 includes information for prompting the user to subscribe to the charge service and pay fee(s).

In T214, the user performs an operation on the "Next" button 682. Due to this, the print application 142 supplies a login page display instruction to the OS 140. The login page display instruction includes a URL corresponding to a login page. The print application 142 also shifts from the foreground state to the background state. When the OS 140 acquires the login page display instruction from the print application 142, the OS 140 accesses the second SP server 300, and causes the display unit 114 to display a login page SC36. Specifically, when the OS 140 acquires the login page display instruction from the print application 142, the OS 140 launches a web browser, and designates a URL in the web browser. Due to this, the login page SC36 is displayed on the web browser. The login page SC36 includes a third message 690, a user name input area 692, a password input area 694, and a "Login" button 696. The third message 690 includes information for prompting the user to input login information. The user name and password are the login information.

In T216, the user inputs the login information and performs an operation on the "Login" button 696. Due to this, the OS 140 sends the inputted login information to the second SP server 300, and receives a login success notification from the second SP server 300. When the OS 140 receives the login success notification from the second SP server 300, the OS 140 generates an launch instruction corresponding to the URL scheme. Such URL scheme includes information indicating that a program to be launched is the print application 142 and information for displaying a screen corresponding to the charge service. Although this is an example, this launch instruction includes identification information indicating that the launch instruction is an launch instruction corresponding to the URL scheme. Next, the OS 140 supplies the generated launch instruction to the print application 142.

The print application 142 is launched by the launch instruction acquired from the OS 140. In the present case, the print application 142 shifts from the background state to the foreground state. As such, the "launch instruction" includes an instruction for launching the print application 142 and an instruction for shifting the print application 142 from the background state to the foreground state. Also, "the print application 142 is launched" includes that the print application 142 is launched and that the print application 142 shifts from the background state to the foreground state. Here, the login success notification received from the second SP server 300 may be added with instruction information for a web browser to generate an launch instruction corresponding to the URL scheme. In this case also, the print application 142 is launched again by such launch instruction, and the print application 142 shifts from the background state to the foreground state.

The print application 142 determines that the launch instruction acquired from the OS 140 is the launch instruction corresponding to the URL scheme (YES to S10 of FIG. 3). In this case, the print application 142 causes the display unit 114 to display the instruction screen SC38 corresponding to the URL scheme without displaying the first update screen regardless of whether the current version Vnow is older than the first minimum version Vmin1. The instruction screen SC38 is a screen for prompting the user to execute physical authentication. The physical authentication is an authentication operation for authenticating a user, and is a physical operation on the printer. The instruction screen SC38 includes a fourth message 700. The fourth message 700 includes information for prompting the user to perform the physical authentication. When the physical authentication is performed on the printer 10B, processes for having the device name of the printer 10B and the user name of the user of the terminal device 100 cooperate with each other are executed between the printer 10B, the terminal device 100, and the second SP server 300. Due to this, subscription of the user to the charge service is completed. If the first update screen is displayed on the display unit 114 before the instruction screen SC38 is displayed on the display unit 114, the user may feel bothered. According to the above configuration, it is possible to suppress the user from feeling bothered.

### (Case D; FIG. 7)

With reference to FIG. 7, Case D will be described. In Case D, the print application 142 acquires the launch instruction from the editor application 144 via the OS 140. An initial state of Case D is the same as the initial state of Case A except that an editor screen SC40 is displayed on the display unit 114 of the terminal device 100. The editor screen SC40 is a screen displayed with the editor application 144 as a main part thereof. The editor screen SC40 includes a letter image area 720, an "Add" button 722, a "Save" button 724, and a "To Printing" button 726. The "Add" button 722 is a button for selecting a content to be added to the letter image area 720. The "Save" button 724 is a button for saving image data in process of creation.

In T310, the user performs an operation on the "To Printing" button 726. Due to this, the editor application 144 supplies image data corresponding to the letter image area 720 and information indicating that the program to be launched is the print application 142 to the OS 140. The OS 140 supplies the launch instruction including instruction information to the print application 142. The instruction information includes the image data corresponding to the letter image area 720. Although this is an example, the instruction information is identification information indicating that such launch instruction is an launch instruction corresponding to another application different from the print application 142.

The print application 142 is launched by the launch instruction acquired from the OS 140. The print application 142 determines that the target launch instruction is not the launch instruction corresponding to the URL scheme (NO to S10 of FIG. 3). Since the target launch instruction includes the instruction information, the print application 142 determines that the target launch instruction is the launch instruction corresponding to another application different from the print application 142 (YES to S20). In this case, the print application 142 causes the display unit 114 to display the preview screen SC42 corresponding to the image data in the instruction information without displaying the first update screen, regardless of whether the current version Vnow is older than the first minimum version Vmin1. The preview screen SC42 includes a preview image 730, a "Close" button 732, a "Save" button 734, and a "Print" button 736. When the print application 142 receives an operation by the user on the "Print" button 736, the print application 142 generates print data corresponding to the preview image, and sends the print data to the printer 10A. As such, printing using the editor application 144 and the print application 142 is executed. If the first update screen is displayed on the display unit 114 before the preview screen SC42 is displayed on the display unit 114, the user may feel bothered. According to the above configuration, it is possible to suppress the user from feeling bothered.

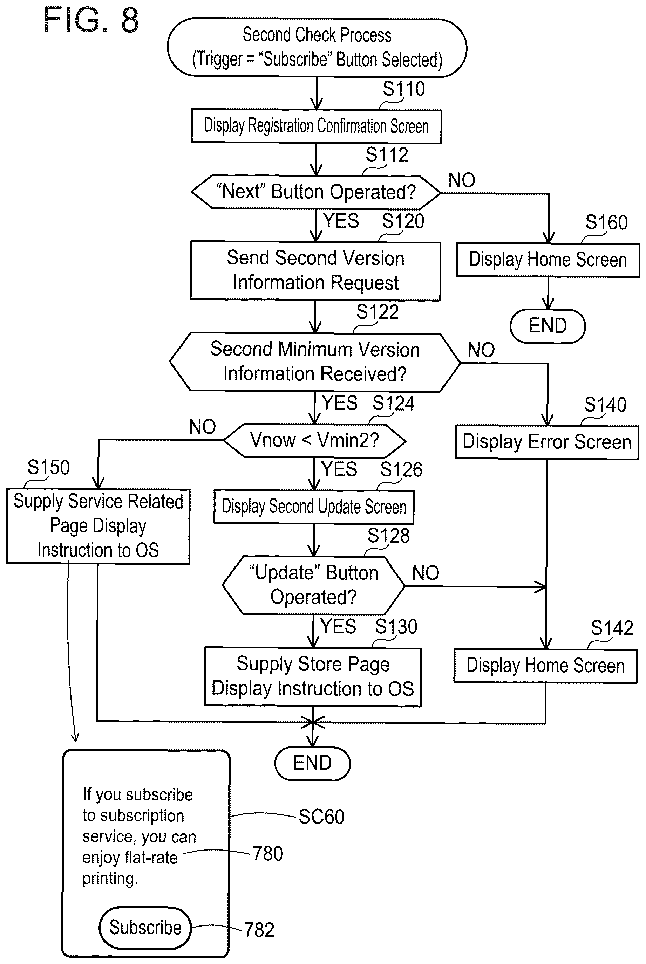

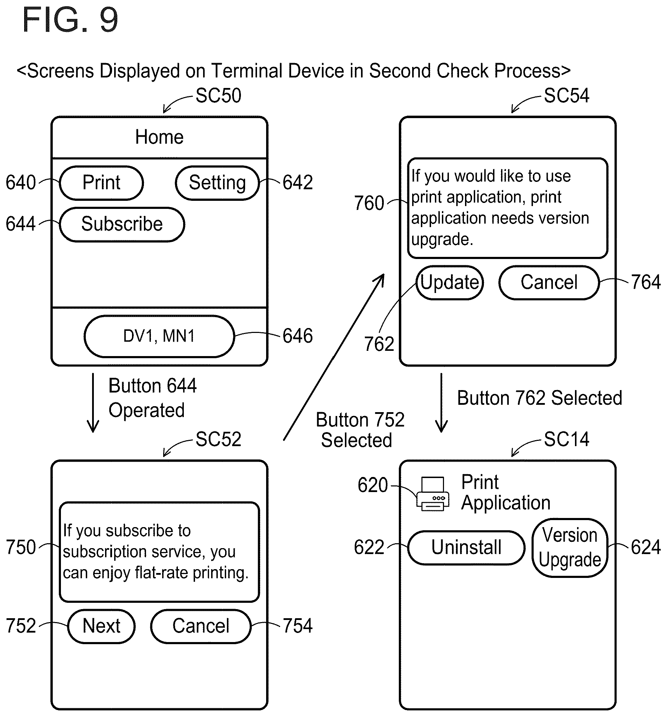

### (Second Check Process; FIGS. 8, 9)

With reference to FIGS. 8 and 9, a second check process executed by the print application 142 will be described. When the print application 142 receives an operation on the "Subscribe" button 644 (see FIG. 9) on a home screen SC50, the print application 142 executes processes of FIG. 8.

In S110, the print application 142 causes the display unit 114 to display a registration confirmation screen. As illustrated in FIG. 9, a registration confirmation screen SC52 includes a fifth message 750, a "Next" button 752, and a "Cancel" button 754. The fifth message 750 indicates a content of the subscription service.

In S112 of FIG. 8, the print application 142 determines whether the print application 142 has received the operation on the "Next" button. When the print application 142 receives the operation on the "Next" button (YES to S112), the print application 142 proceeds to S120. Contrary to this, when the print application 142 receives an operation on the "Cancel" button (NO to S112), the print application 142 proceeds to S160.

In S160, the print application 142 causes the display unit 114 to display a home screen. Such home screen is the same as the screen that was displayed on the display unit 114 when the processes of FIG. 8 were started. When S160 ends, the print application 142 ends the processes of FIG. 8.

In S120, the print application 142 sends a second version information request to the management server 400. The second version information request is a signal for requesting minimum version information corresponding to the function name "Subscription" to be sent. The second version information request includes the application ID "AP1", the function name "Subscription", a model name, and country information. When the management server 400 receives the second version information request from the terminal device 100, the management server 400 specifies second minimum version information. The second minimum version information is the minimum version information stored in the management table 440 in association with the respective information within the second version information request. Then, the management server 400 sends the second minimum version information to the terminal device 100.

In S122, the print application 142 determines whether the print application 142 has received the second minimum version information from the management server 400. When the print application 142 receives the second minimum version information from the management server 400 (YES to S122), the print application 142 proceeds to S124. Contrary to this, when the print application 142 does not receive the second minimum version information from the management server 400 (NO to S122), the print application 142 proceeds to S140.

In S124, the print application 142 determines whether the current version Vnow of the print application 142 is older than a second minimum version Vmin2 indicated by the second minimum version information. When the current version Vnow is older than the second minimum version Vmin2 (YES to S124), the print application 142 proceeds to S126. Contrary to this, when the current version Vnow is not older than the second minimum version Vmin2 (NO to S124), the print application 142 proceeds to S150.

In S126, the print application 142 causes the display unit 114 to display a second update screen. As illustrated in FIG. 9, a second update screen SC54 includes a sixth message 760, an "Update" button 762, and a "Cancel" button 764. The "Update" button 762 is a button for transitioning to a page for upgrading the version of the print application 142. Since the second update screen SC54 includes the "Cancel" button 764, the user can select whether to upgrade the version of the print application 142. Accordingly, user convenience can be improved.

In S128 of FIG. 8, the print application 142 determines whether the print application 142 has received the operation on the "Update" button. When the print application 142 receives the operation on the "Update" button (YES to S128), the print application 142 proceeds to S130. Contrary to this, when the print application 142 does not receive the operation on the "Update" button (NO to S128), the print application 142 proceeds to S142. Here, a case where the operation is not received on the "Update" button is a case in which an operation on the "Cancel" button is received.

S130 is the same as S50 of FIG. 3. That is, the first store page SC14 of FIG. 9 is displayed on the display unit 114. When S130 ends, the print application 142 ends the processes of FIG. 8.

Also, in S140, the print application 142 causes the display unit 114 to display an error screen. The error screen includes a message indicating that the second minimum version information has not been received and an "OK" button. When the print application 142 receives an operation by the user on the "OK" button, the print application 142 proceeds to S142.

S142 is the same as S160. When S142 ends, the print application 142 ends the processes of FIG. 8. As mentioned above, when the operation on the "Cancel" button in the second update screen is performed, the home screen is displayed on the display unit 114 without the version of the print application 142 being upgraded. In this case, because the version of the print application 142 is older than the second minimum version, the user cannot use the subscription service function. That is, when the operation on the "Cancel" button on the second update screen is performed, the use of the subscription service function is limited.

Also, when NO is determined to S124, the print application 142 supplies a service-related page display instruction to the OS 140 in S150. When the OS 140 acquires the service-related page display instruction from the print application 142, the OS 140 accesses the first SP server 200, and causes the display unit 114 to display a service-related page SC60. The service-related page SC60 includes a seventh message 780 and a "Subscribe" button 782. The seventh message 780 includes information indicating a content of the subscription service. When S150 ends, the print application 142 ends the processes of FIG. 8.

### (Effects of Present Embodiment)

According to the above configuration, when the print application 142 is launched by the first launch instruction (NO to S10, NO to S20 of FIG. 3) and also the current version Vnow of the print application 142 is older than the first minimum version Vmin1 (YES to S44), the terminal device 100 displays the first update screen on its display unit (S46). Also, when the print application 142 is launched by the first launch instruction (NO to S10, NO to S20 of FIG. 3) and also the current version Vnow of the print application 142 is not older than the first minimum version Vmin1 (NO to S44), the terminal device 100 displays the home screen on the display unit 114 without displaying the first update screen (S60). Further, when the print application 142 is launched by the second launch instruction regardless of whether the current version Vnow of the print application 142 is older than the first minimum version Vmin1, the terminal device 100 displays a screen corresponding to the URL scheme on the display unit 114 without displaying the first update screen (S12). According to such configuration, it is possible to suitably switch whether to display the first update screen on the display unit 114.

### (Correspondence Relationships)

The print application 142 is an example of "computer program". The current version Vnow of the print application 142 being older than the first minimum version Vmin1 is an example of "first predetermined condition". The home screen displayed in S60 of FIG. 3 is an example of "first predetermined screen." The screens displayed in S12, S22 of FIG. 3 are examples of "second predetermined screen". The "Update" button 602 of FIG. 3 is an example of "update object". The store page display instruction in S50 of FIG. 3 is an example of "display instruction". The store page is an example of "webpage for upgrading the version of the computer program". The home screen SC50 of FIG. 9 is an example of "function selection screen". The "Print" button 640, the "Setting" button 642, the "Subscribe" button 644 are an example of "plurality of function objects". The "Subscribe" button 644 is an example of "specific function object". The current version Vnow of the print application 142 being older than the second minimum version Vmin2 is an example of "second predetermined condition". The "Update" button 762 of FIG. 9 is an example of "second update object". The "Cancel" button 764 of FIG. 9 is an example of "non-update object". The service-related page SC60 of FIG. 8 is an example of "third predetermined screen". The subscription service function includes limitation of the use of "specific function". The first version information request in S40 of FIG. 3 is an example of "condition information request". The first minimum version information is an example of "condition information". The country information is an example of "region information". "Country A", "Country B" are an example of "first region". "Country C" is an example of "second region". The printer 10B is an example of "target device". The charge service is an example of "service". The second SP server 300 is an example of "service providing server". The notification screen 650 of FIG. 5 is an example of "notification object". The editor application 144 is an example of "specific computer program".

S46, S60 of FIG. 3 are an example executed by "first display control unit". S12, S22 of FIG. 3 are an example executed by "second display control unit".

(First Modification) In the above-mentioned embodiments, each of the servers 200, 300, 400, 500 is described as a separate server, but one or more or all of those servers may be configured collectively as a single server. Although this is an example, the first SP server 200 and the second SP server 300 may be configured collectively as a single server, and the first SP server 200, the second SP server 300, and the management server 400 may be configured collectively as a single server.

(Second Modification) In the above-mentioned embodiments, each of the servers 200, 300, 400, 500 is a physical server, but each of the servers 200, 300, 400, 500 is not limited to the physical one, but may be a virtual server or a virtual machine on a cloud. That is, the vendor may not prepare hardware of the servers 200, 300, 400, 500 by themselves, but may use an environment provided by an external cloud computing service. In this case, the vendor may realize the servers 200, 300, 400, 500 by preparing a program (software) of each of the servers 200, 300, 400, 500 and introducing the same in the above-mentioned environment. In another modification, each of the servers 200, 300, 400, 500 may be disposed on the Internet 6 by a different business entity different from the vendor.

(Third Modification) The "first predetermined condition" may be the current version Vnow of the print application 142 being within a predetermined version range.

(Fourth Modification) When an operation for upgrading the version of the print application 142 is not received while the first update screen is displayed, the print application 142 may cause the display unit 114 to display a screen different from the first update screen.

(Fifth Modification) The first update screen may include an object for receiving an operation for not upgrading the version of the print application 142. Although this is an example, the first update screen may include a button for closing the first update screen and/or a button for cancelling the upgrade of the version of the print application 142.

(Sixth Modification) The first update screen may include an object for receiving the operation for not upgrading the version of the print application 142, but the operation on such object may be disabled. Although this is an example, the first update screen may include a "Cancel" button having a display form of being grayed out.

(Seventh Modification) The print application 142 may cause the display unit 114 to display a URL which the user should access in S50 of FIG. 3.

(Eighth Modification) S52 of FIG. 3 can be omitted. In the present modification, when S50 ends, the print application 142 ends the processes of FIG. 3.

(Ninth Modification) The print application 142 may not execute the second check process of FIG. 8. In the present modification, "third display control unit" can be omitted.

(Tenth Modification) The second update screen may not include an "Update" button.

(Eleventh Modification) The management table 440 may not include a function name. In the present modification, the print application 142 sends a version information request including the application ID "AP1", the model name, and the country information 146 to the management server 400 in S40 of FIG. 3. The print application 142 receives the minimum version information corresponding to the version information request from the management server 400 in S42. The print application 142 determines whether the current version Vnow is older than the minimum version Vmin indicated by the minimum version information in S44. In the present modification, the process contents of S120, S122, S124 of FIG. 8 are the same as the process contents of S40, S42, S44 of FIG. 3. In the present modification, the "second predetermined condition" is the same as the "first predetermined condition".

(Twelfth Modification) The print application 142 may be configured to, each time a predetermined duration elapses, receive the first minimum version information and the second minimum version information from the management server 400. In the present modification, S40, S42 of FIG. 3 can be omitted. In the present modification, "condition information request sending unit", "condition information reception unit" can be omitted.

(Thirteenth Modification) The management table 440 of the management server 400 may not include the country information. In the present modification, S30, S32 of FIG. 3 can be omitted. In the present modification, "regional information acquisition unit" can be omitted.

(Fourteenth Modification) The "regional information" may not be limited to the country information but may be information indicating a wider range than the country information, or may be information indicating a smaller range (e.g., city) than the country information.

(Fifteenth Modification) The "service" may not be limited to the charge service, but may be the subscription service, and/or a remote printing service, for example. The remote printing service is a service which allows to send a print instruction to a printer via the second SP server 300 from a location outside home.

(Sixteenth Modification) The "target device" may not be limited to a printer, but may be a multifunction machine configured to execute a scan function, a facsimile function, a copy function, for example, in addition to the print function.

(Seventeenth Modification) In each of the above-described embodiments, the processes of FIGS. 3 to 9 are realized by software (e.g., programs 140, 142, 144), but at least one of these processes may be realized by hardware such as a logic circuitry.

## Claims

1. A computer program (142) for a terminal device (100),
wherein the computer program (142) causes a computer (130) of the terminal device to function as:
a first display control unit configured to, in a case where the computer program (142) is launched by a first launch instruction and a version of the computer program (142) satisfies a first predetermined condition, display, on a display (114) of the terminal device (100), a first update screen (SC2) for prompting a user to upgrade the version of the computer program (142), wherein in a case where the computer program (142) is launched by the first launch instruction and the version of the computer program (142) does not satisfy the first predetermined condition, the first update screen (SC2) is not displayed but a first predetermined screen (SC18) is displayed on the display (114); and
a second display control unit configured to, in a case where the computer program (142) is launched by a second launch instruction different from the first launch instruction, display on the display (114), a second predetermined screen (SC38, SC42) without displaying the first update screen (SC2) regardless of whether the version of the computer program (142) satisfies the first predetermined condition.

2. The computer program (142) as in claim 1, wherein in a case where an operation for upgrading the version of the computer program (142) is not received under a state where the first update screen (SC2) is displayed, displaying of a screen different from the first update screen (SC2) on the display (114) is limited.

3. The computer program (142) as in claim 2, wherein the first update screen (SC2) includes an update object (602) for receiving the operation for upgrading the version of the computer program (142) but does not include an object for receiving an operation for not upgrading the version of the computer program (142).

4. The computer program (142) as in claim 3, wherein the computer program (142) further causes the computer (130) to function as:
a supply unit configured to, in a case where an operation on the update object (602) is received, supply, to an Operating System (OS) program (140) of the terminal device, a display instruction of a web page for upgrading the version of the computer program (142).

5. The computer program (142) as in claim 4, wherein the computer program (142) is configured to, in a case where the display instruction is supplied to the OS program (140), shift from a foreground state in which the computer program (142) is running in a foreground to a background state in which the computer program (142) is running in a background,
wherein the first display control unit is configured to:
in a case where the computer program (142) shifts from the background state to the foreground state and the version of the computer program (142) satisfies the first predetermined condition after the display instruction has been supplied to the OS program (140), display the first update screen (SC2) on the display (114), and
in a case where the computer program (142) shifts from the background state to the foreground state and the version of the computer program (142) does not satisfy the first predetermined condition after the display instruction has been supplied to the OS program (140), display the first predetermined screen (SC18) on the display (114) without displaying the first update screen (SC2).

6. The computer program (142) as in any one of claims 3 to 5, wherein the computer program (142) further causes the computer (130) to function as:
a third display control unit configured to, in a case where an operation on a specific function object (644) included in a plurality of function objects (640, 642, 644) displayed on a function selection screen (SC50) is received and the version of the computer program (142) satisfies a second predetermined condition, display, on the display (114), a second update screen (SC54) different from the first update screen (SC2), the second update screen (SC54) includes a second update object (762) for receiving the operation for upgrading the version of the computer program (142) and a non-update object (764) for receiving the operation for not upgrading the version of the computer program (142), wherein in a case where an operation on the specific function object (644) is received and the version of the computer program (142) does not satisfy the second predetermined condition, the second update screen (SC54) is not displayed but a third predetermined screen (SC60) corresponding to the specific function object (644) is displayed on the display (114).

7. The computer program (142) as in claim 6, wherein in a case where an operation on the non-update object (764) is received on the second update screen (SC54), use of a specific function corresponding to the specific function object is limited.

8. The computer program (142) as in claims 6 or 7, wherein the second predetermined condition is different from the first predetermined condition.

9. The computer program (142) as in any one of claims 1 to 8, wherein the computer program (142) further causes the computer (130) to function as:
a condition information request sending unit configured to, in a case where the computer program (142) is launched by the first launch instruction, send a condition information request to a management server (400), wherein the management server (400) being configured to store condition information indicating the first predetermined condition; and
a condition information reception unit configured to, in response to the condition information request being sent to the management server (400), receive the condition information from the management server (400),
wherein the first display control unit is configured to, in a case where the computer program (142) is launched by the first launch instruction and the condition information is not received from the management server (400) even though the condition information request has been sent to the management server (400), display, on the display (114), the first predetermined screen (SC18) without displaying the first update screen (SC2) regardless of whether the version of the computer program (142) satisfies the first predetermined condition.

10. The computer program (142) as in any one of claims 1 to 9, wherein the computer program (142) further causes the computer (130) to function as:
a regional information acquisition unit configured to acquire regional information indicating a region in which the terminal device (100) is used,
wherein the first display control unit is configured to:
in a case where the computer program (142) is launched by the first launch instruction, and the regional information indicates a first region, and the version of the computer program (142) satisfies the first predetermined condition, display the first update screen (SC2) on the display (114),
in a case where the computer program (142) is launched by the first launch instruction, and the regional information indicates the first region, and the version of the computer program (142) does not satisfy the first predetermined condition, display the first predetermined screen (SC18) on the display (114) without displaying the first update screen (SC2), and
in a case where the computer program (142) is launched by the first launch instruction, and the regional information indicates a second region different from the first region, display the first predetermined screen (SC18) on the display (114) without displaying the first update screen (SC2) regardless of whether the version of the computer program (142) satisfies the first predetermined condition.

11. The computer program (142) as in any one of claims 1 to 10, wherein the first predetermined screen (SC18) is a home screen, and
the second predetermined screen (SC38, SC42) is a screen different from the home screen and corresponds to the second launch instruction.

12. The computer program (142) as in any one of claims 1 to 11, wherein the computer program (142) further causes the computer (130) to function as:
a first launch instruction acquisition unit configured to, in response to a notification object corresponding to the computer program (142) being displayed on the display (114) and an operation on the notification object being received, acquire the first launch instruction from an Operating System (OS) program (140) of the terminal device (100).

13. The computer program (142) as in any one of claims 1 to 12, wherein the computer program (142) further causes the computer (130) to function as:
a second launch instruction acquisition unit configured to acquire the second launch instruction from a specific computer program (144) different from the computer program (142) and an Operating System (OS) program (140) of the terminal device (100).

14. A terminal device (100) comprising:
a display (114);
a first display control unit configured to, in a case where a computer program (142) of the terminal device (100) is launched by a first launch instruction and a version of the computer program (142) satisfies a first predetermined condition, display, on the display (114), a first update screen (SC2) for prompting a user to upgrade the version of the computer program (142), wherein in a case where the computer program (142) is launched by the first launch instruction and the version of the computer program (142) does not satisfy the first predetermined condition, the first update screen (SC2) is not displayed and a first predetermined screen (SC18) is displayed on the display (114); and
a second display control unit configured to, in a case where the computer program (142) is launched by a second launch instruction different from the first launch instruction, display, on the display (114), a second predetermined screen (SC38, SC42) without displaying the first update screen (SC2) regardless of whether the version of the computer program (142) satisfies the first predetermined condition.

15. A method for controlling a terminal device (100), the method comprising:
in a case where a computer program (142) of the terminal device (100) is launched by a first launch instruction and a version of the computer program (142) satisfies a first predetermined condition, displaying, on a display (114) of the terminal device (100), a first update screen (SC2) for prompting a user to upgrade the version of the computer program, wherein in a case where the computer program (142) is launched by the first launch instruction and the version of the computer program (142) does not satisfy the first predetermined condition, the first update screen (SC2) is not displayed but a first predetermined screen (SC18) is displayed on the display (114); and
in a case where the computer program (142) is launched by a second launch instruction different from the first launch instruction, displaying, on the display (114), a second predetermined screen (SC38, SC42) without displaying the first update screen (SC2) regardless of whether the version of the computer program (142) satisfies the first predetermined condition.
